# EUROPÄISCHE PATENTANMELDUNG

(11) **EP 0 884 337 A1**
(43) Veröffentlichungstag der Anmeldung: **16.12.1998**
(21) Anmeldenummer: 98109725.6
(22) Anmeldetag: 28.05.1998
(51) Int. Cl.: C08G 18/40, C08G 18/63, C09D 5/04

(54) **Rheologiebeeinflusser-Zusammensetzung für Überzugsmittel**

(30) Priorität: 10.06.1997 DE 19724408
(71) Anmelder: Herberts Gesellschaft mit beschränkter Haftung, 42285 Wuppertal (DE)
(72) Erfinder: Dahm, Ralf, 42929 Wermelskirchen (DE); Kerber, Hermann, 42369 Wuppertal (DE); Lerch, Dieter Dr., 50859 Köln (DE); Schubert, Walter Dr., 42349 Wuppertal (DE); Flosbach, Carmen Dr., 42287 Wuppertal (DE); Kirchgässler, Sandra, 51145 Köln (DE); Schnödewind, Frank, 52525 Heinsberg (DE)
(74) Vertreter: Türk, Gille, Hrabal

(57) **Zusammenfassung**

Die Erfindung betrifft eine Zusammensetzung und die Herstellung und Verwendung dieser Zusammensetzung, welche sich als Rheologiebeeinflusser für Überzugsmittel eignet und ein Gemisch enthält, das durch Vorlage von
A) einem oder mehreren hydroxylgruppenhaltigen (Meth)acryl-Copolymerisaten und/oder einem oder mehrern hydroxylgruppenhaltigen Polyestern mit einer Hydroxylzahl von 30 bis 200 mg KOH/g und einem Carboxylgruppengehalt entsprechend einer Säurezahl von 0 bis 50 mg KOH/g,
B) einem oder mehreren Copolymerisaten aus Ethylhexyl(meth)acrylat, einem oder mehreren Hydroxyalkyl(meth)acrylaten sowie davon verschiedenen α,β-ungesättigten Monomeren und
C) einer hydroxyfunktionellen Mikrodispersion, erhältlich durch Vorlage einer Lösung eines oder mehrerer hydroxyl- und/oder carboxylgruppenhaltiger Polyester und/oder (Meth)acryl-Copolymerisate, wobei bis zur Hälfte der Polyester- und/oder Copolymerisatmoleküle jeweils mit einem Molekül Maleinsäure oder Maleinsäureanhydrid verestert sein kann, sowie Polymerisation von einem oder mehreren Hydroxyalkyl(meth)acrylaten im Gemisch mit einem oder mehreren davon verschiedenen ungesättigten Monomeren in dieser Vorlage, und Umsetzung des Gemisches aus A), B) und C) mit
D) einem oder mehreren aliphatischen Polyisocyanaten,
E) ε-Caprolactam und
F) einem oder mehreren primären Monoaminen, erhältlich ist, wobei die Menge der in Komponenten A), B) und C) enthaltenen (Meth)acryl-Copolymerisate und/oder Polyester 50 bis 80 Gew.-%, die Menge der Polymerisate B) 5 bis 30 Gew.-%, die Menge der in C) enthaltenen Mikroteilchen 1 bis 5 Gew.-%, die Menge der Diisocyanate D) 7 bis 33 Gew.-%, die Menge ε-Caprolactam E) 2 bis 9 Gew.-%, und die Menge der primären Monoamine F) 1 bis 5 Gew.-% beträgt, wobei sich die Gewichtsprozente jeweils auf den Festkörpergehalt beziehen und zu 100 Gew.-% addieren.

Die Erfindung betrifft ferner Überzugsmittel und die Herstellung dieser Überzugsmittel, welche die genannte Zusammensetzung als Rheologiebeeinflusser enthalten.

## Beschreibung

Die Erfindung betrifft eine Zusammensetzung für Überzugsmittel, welche ablaufsichere Überzüge auf Basis von pigmentierten oder nicht-pigmentierten Überzugsmitteln ermöglicht.

Durch Rheologie-Beeinflussung, d.h. Umwandlung der Überzugsmittel mit quasi Newton'schem Fließverhalten in solche mit plastischem oder pseudo-plastischem Fließverhalten kann ein Ablaufen der Überzugsmittel, insbesondere an senkrechten Flächen, an Kanten und in Sicken verhindert werden. Derartig ausgerüstete Überzugsmittel werden insbesondere dann verwendet, wenn dickschichtige Lacksysteme oder festkörperreiche niedrigmolekulare hitzehärtbare Lacke eingesetzt werden, die verstärkt zum Ablaufen neigen. Hierzu gibt es zahlreiche Literatur, z.B. DE-A 27 51 761, EP-A 0 192 304, EP-A 0 198 519, EP-A 0 435 428.

In dieser Literatur wird die Bildung von Di- oder Polyharnstoffverbindungen beschrieben durch Umsetzung primärer, sekundärer Mono-, Di- oder Polyamine oder Alkoholamine mit Mono-, Di- oder Triisocyanaten in einem Trägerharz, welches dem Lack zugesetzt wird. Die Polyharnstoffverbindungen bewirken eine Ausbildung von Wasserstoffbrücken, deren nach der Applikation sich aufbauendes Netzwerk den Lackfilm beispielsweise an senkrechten Trägerflächen stabilisiert. Die Ablaufsicherung in nassen Lackfilmen wird ebenfalls auf diese Wirkung der Polyharnstoffverbindungen zurückgeführt.
DE-A 27 51 761 betrifft eine thixotrope Zusammensetzung, welche neben einem Bindemittel ein "Läuferkontrollmittel" enthält, welches durch Reaktion eines Diisocyanats, z.B. das Trimere des Hexamethylen-1,6-diisocyanats, mit Benzylamin entsteht. EP-A 0 198 519 beschreibt die Verwendung von Polyharnstoff-Verbindungen für thixotrope Zusammensetzungen, welche durch Reaktion von symmetrischen aliphatischen oder homocyclischen (cycloaliphatische, aromatische) Diisocyanaten mit Etheraminen hergestellt werden. EP-A 0 192 304 verwendet Polyharnstoff-Verbindungen für thixotrope Beschichtungsmittel auf Basis von Isocyanat-Trimeren aus einem Isocyanat mit 3 bis 20 Kohlenstoffatomen und einem primären Amin, darunter auch Monoamine. EP-A 0 435 428 beansprucht den Einsatz von Polyharnstoff-Verbindungen aus bevorzugt Isocyanurat-Trimeren und primären und/oder sekundären Monoaminen, beispielsweise aliphatischen Monoaminen.

Für die gleichbleibende Wirkungsweise der festen Polyharnstoffverbindungen ist eine entsprechende Teilchengröße erforderlich. Zur Erzeugung dieser Teilchengröße ist bezüglich der bekannten Polyharnstoffverbindungen der Einsatz von hohen Rührgeschwindigkeiten mit speziellen Rührern und Dosierern erforderlich. Darüber hinaus können nicht alle lacküblichen Monoalkohole verwendet werden, ohne die Rheologie nachteilig zu beeinflussen. Generell muß beim Einsatz der bekannten Polyharnstoffe damit gerechnet werden, daß keine glatten Filmoberlächen erhältlich sind, was zu verringertem Glanz und Brillanz führt.

DE 42 36 901 betrifft eine Rheologie-Zusammensetzung, welche neben (Meth)acryl-Copolymerisaten und/oder Polyestern eine OH-funktionelle Mikrodispersion sowie Diisocyanate und aliphatische primäre Monoamine enthält. Hier kann es durch den Einsatz aromatischer Diisocyanate zu Vergilbungen des Überzuges kommen. Die erzielten Rheologiewerte sind noch verbesserungswürdig.

Aufgabe der Erfindung ist daher die Bereitstellung von Überzugsmitteln, welche eine hohe Ablaufsicherheit bei Applikation und Einbrennvorgang gewährleisten und gleichzeitig einen guten Verlauf aufweisen, was zu glatten, störungsfreien Oberflächen führt. Darüber hinaus soll die Rheologie-Zusammensetzung eine verbesserte Einarbeitbarkeit in das Überzugsmittel ermöglichen und eine Vergilbung des Überzuges, insbesondere verursacht durch UV-Strahlung oder Wärmebelastung bzw. verursacht während des Einbrennvorganges, verhindern.

Die Aufgabe kann gelöst werden durch die Bereitstellung von Überzugsmitteln, welche eine Rheologie-Zusammensetzung enthalten, die auf speziellen Harnstoff-Verbindungen basiert, die auf einer hydroxyfunktionellen Acryldispersion gebunden werden.

Ein weiterer Gegenstand der Erfindung ist die rheologiebeeinflussende Zusammensetzung. Die Rheologie-Zusammensetzung ist erhältlich durch Vorlage von
A) einem oder mehreren hydroxylgruppenhaltigen (Meth)acryl-Copolymerisaten und/oder einem oder mehreren hydroxylgruppenhaltigen Polyestern mit einer Hydroxylzahl von 30 bis 200 mg KOH/g und einem Carboxylgruppengehalt entsprechend einer Säurezahl von 0 bis 50 mg KOH/g,
B) einem oder mehreren Copolymerisaten aus Ethylhexyl(meth)acrylat, einem oder mehreren Hydroxyalkyl(meth)acrylaten sowie davon verschiedenen α, β-ungesättigten Monomeren und
C) einer hydroxyfunktionellen Mikrodispersion, erhältlich durch Vorlage einer Lösung eines oder mehrerer hydroxyl- und/oder carboxylgruppenhaltiger Polyester und/oder (Meth)acrylcopolymerisate, wobei bis zur Hälfte der Polyester- und/oder Copolymerisat-Moleküle jeweils mit einem Molekül Maleinsäure oder Maleinsäureanhydrid verestert sein kann, sowie Polymerisation von einem oder mehreren Hydroxyalkyl(meth)acrylaten im Gemisch mit einem oder mehreren davon verschiedenen ungesättigten Monomeren in dieser Vorlage, und Umsetzung des Gemisches aus A), B) und C) mit
D) einem oder mehreren aliphatischen Polyisocyanaten,
E) ε-Caprolactam und
F) einem oder mehreren primären Monoaminen, die im Gemisch mit einem Teil der Komponente A), B) und/oder des löslichen Anteils der Komponente C) vorzugsweise im Verhältnis Monoamin zu Komponente A), B) und/oder C) im Verhältnis 9 : 1 bis 1 : 1 vorliegen können,
   wobei die Menge der in den Komponenten A), B), C), und F) enthaltenen

(Meth)acrylcopolymerisate und/oder Polyester 50 bis 80 Gew.-%, die Menge der Polymerisate B) 5 bis 30 Gew.-%, die Menge der in C) enthaltenen Mikroteilchen 1 bis 5 Gew.-%, die Menge der Polyisocyanate D) 7 bis 33 Gew.-%, die Menge ε-Caprolactam E) 2 bis 9 Gew.-%, und die Menge der primären Monoamine F) 1 bis 5 Gew.-% beträgt, wobei sich die Gewichtsprozente jeweils auf den Festkörpergehalt beziehen und zu 100 Gew.-% addieren, und die Zusammensetzung außerdem Pigmente, Füllstoffe, lackübliche Additive und/oder Lösemittel enthalten kann.

Bei der Komponente C) handelt es sich um eine Mikrodispersion fester Mikroteilchen in einem gegebenenfalls Lösemittel enthaltenden löslichen Anteil. Der Anteil an festen Teilchen ist beispielsweise in einer Ultrazentrifuge bestimmbar.

Gemäß einer bevorzugten Ausführungsform ist die Komponente B) erhältlich durch Polymerisation einer Mischung von
a) 20 bis 50 Gew.-% Ethylhexyl(meth)acrylat,
b) 30 bis 60 Gew.-% einem oder mehreren Hydroxyalkyl(meth)acrylaten
c) 15 bis 40 Gew.-% davon verschiedenen alpha,beta-ungesättigten Monomeren,
   und
d) 0 bis 4 Gew.-% (Meth)acrylsäure.

Gemäß einer besonders bevorzugten Ausführungsform wird zur Herstellung der Komponente B) eine Mischung aus
a) 31,2 Gew.-% Ethylhexyl(meth)acrylat,
b) 43,7 Gew.-% einem oder mehreren Hydroxyalkyl(meth)acrylat
c) 24,3 Gew.-% davon verschiedenen alpha,beta-ungesättigten Monomeren und
d) 0,8 Gew.-% Acrylsäure
   polymerisiert.

Die Komponente C) ist vorzugsweise erhältlich durch Vorlage einer Lösung von
e) 15 bis 85 Gew.-% eines oder mehrerer hydroxyl- und/oder carboxylgruppenhaltiger Polyester und/oder (Meth)acrylcopolymerisate, wobei bis zur Hälfte der Polyester und/oder Copolymerisat-Moleküle jeweils mit einem Molekül Maleinsäure verestert sein kann und Polymerisation in dieser Vorlage von
f) 15 bis 85 Gew.-% eines oder mehrerer Hydroxyalkyl(meth)acrylate und einem oder mehreren davon verschiedenen ungesättigten Monomeren.

Gemäß einer weiteren bevorzugten Ausführungsform sind die radikalisch polymerisierbaren Monomeren der Komponente f) ein Gemisch von
f1) 80 bis 100 Gew.-% eines oder mehrerer Hydroxyalkyl(meth)acrylate und
f2) 0 bis 20 Gew.-% eines oder mehrerer anderer ungesättigter Monomerer.

Gemäß einer weiteren bevorzugten Ausführungsform werden zu der Vorlage mit den Komponenten A), B) und C) die Komponenten D), E) und F), in der Summe enthaltend 7 bis 24 Gew.-% Diisocyanat (D), 2 bis 9 Gew.-% ε-Caprolactam (E) und 1 bis 5 Gew.-% ein oder mehrere aliphatische primäre Monoamine und/oder Hydroxylamine (F), zugesetzt.

Die Herstellung der Rheologie-Zusammensetzung erfolgt beispielsweise in kühl- und beheizbaren Reaktiongefäßen, die mit einem Rührwerk, Thermometer und Rückflußkühler ausgerüstet sind unter Vorlage eines oder mehrerer gelöster Copolymerisate und/oder Polyester A), eines oder mehrerer Polymerisate B) und der Mikrodispersion C) und Zugabe des Polyisocyanats D) und des ε-Caprolactams E) bei Temperaturen von 20 bis 40°C, vorzugsweise 30°C. Der Einsatz des ε-Caprolactams bewirkt eine Teilblockierung des Diisocyanats. Es ist vorteilhaft, die Umsetzung der Komponente D) und F) separat durchzuführen und das daraus resultierende mindestens teilweise verkappte Polyisocyanat der Vorlage aus A), B) und/oder C) zuzufügen. Danach wird das primäre Monoamin F) zudosiert, wobei die Komponente F) entweder mit einem Teil des hydroxylgruppenhaltigen Bindemittels aus Komponente A), B) und/oder C) oder mit einem inerten organischen Lösemittel kontinuierlich über einen Zeitraum von 2 bis 5 Stunden, vorzugsweise 3 Stunden, zudosiert wird. Danach wird etwa 2 Stunden nachreagiert und mit lacküblichen Lösemitteln auf die gewünschte Verarbeitungskonzentration verdünnt. Das Verhältnis zwischen der Komponente F) und dem Teil der Komponente A), B) und/oder C) liegt vorzugsweise im Bereich von 9 : 1 bis 1 : 1.

Während des Herstellungsprozesses der Rheologie-Zusammensetzung werden zur Solvatisierung und Herstellung von einzelnen Komponenten, beispielsweise Komponente A), B) und C), sowie zur Verdünnung organische Lösemittel eingesetzt. Diese sind auch später in den erfindungsgemäßen Überzugsmitteln verwendbar. Diese Lösemittel können übliche lacktechnische Lösemittel sein, beispielsweise Glykolether, Ester, Ketone, Alkohole, aromatische und aliphatische Kohlenwasserstoffe, einzeln oder im Gemisch. Aprotische Lösemittel sind bevorzugt.

Zur Herstellung der erfindungsgemäßen Überzugsmittel kann die erfindungsgemäße Rheologie-Zusammensetzung zusammen mit üblichen hydroxylgruppenhaltigen Bindemitteln eingesetzt werden. Beispiele für verwendbare hydroxylgruppenhaltige Bindemittel sind übliche Filmbildner, beispielsweise auf der Basis von hydroxylgruppenhaltigen (Meth)acrylcopolymerisaten, Polyestern, Polyurethanen, Epoxidharzen, wie sie dem Fachmann geläufig sind. Als Bindemittel können auch die gleichen hydroxylgruppenhaltigen Copolymerisate und Polyester verwendet werden, wie sie für die Komponente A) eingesetzt werden. Die Überzugsmittel können in üblicher Weise mit Vernetzungsmitteln formuliert werden.

Die Herstellung des in der erfindungsgemäßen Rheologie-Zusammensetzung enthaltenen (Meth)acrylcopolymerisats (Komponente A) und d)) kann durch Polymerisation nach üblichen Verfahren, z.B. der Substanz-, Lösungs- oder Perlpolymerisation durchgeführt werden. Bevorzugt ist das Lösungspolymerisationsverfahren. Bei diesem wird das Lösemittel in dem Reaktionsgefäß vorgelegt, auf Siedetemperatur erhitzt und die monomere Mischung im Gemisch mit einem Initiator kontinuierlich in einer bestimmten Zeit zudosiert. Geeignete Initiatoren sind Per- und Azo-Verbindungen, wobei Art und Menge so gewählt werden, daß während der Zulaufphase ein möglichst konstantes Radikalangebot vorliegt. Bevorzugt wird eine Menge von 0,2 bis 8 Gew.-% Initiatoren, bezogen auf die Monomeren-Einwaage eingesetzt.

Als organische Lösemittel sind die bereits genannten lacktechnischen Lösemittel einsetzbar. Die Polymerisationsreaktion kann unter Zuhilfenahme von Kettenüberträgern beispielsweise Merkaptane, Chlorkohlenwasserstoffe, Cumol ablaufen.

Die Polymerisationsbedingungen, wie Reaktionstemperatur, Zulaufzeit der Monomeren-Mischung, Lösungskonzentration werden so gewählt, daß die (Meth)arcyl-Copolymerisate ein Zahlenmittel der Molmasse von 1500 bis 30000 aufweisen (bestimmt durch Gelpermeationschromatographie unter Verwendung von Polystyrol als Eichsubstanz). Die Glasübergangstemperatur liegt bevorzugt in einem Bereich von -20°C bis +80°C.

Bevorzugte Monomerkomponenten für die Herstellung der (Meth)acrylcopolymerisate sind Alkylester sowie Hydroxyalkylester der Acrylsäure und/oder Methacrylsäure neben gegebenenfalls weiteren α,β-ungesättigten Monomeren und/oder gegebenenfalls Acrylsäure und/oder Methacrylsäure. Beispiele für langkettige, verzweigte oder unverzweigte Alkylester sind Alkyl(meth)acrylate mit C₈-C₁₈ im Alkylteil, z.B. Ethylhexyl(meth)acrylat, Octyl(meth)acrylat, Laurylacrylat, 3,5,5-Trimethylhexyl(meth)acrylat, Isobornylacrylat. Beispiele für kurz- und mittelkettige, verzweigte oder unverzweigte Alkylester sind Alkyl(meth)acrylat mit C₁-C₇ im Alkylteil, z.B. Methyl(meth)acrylat, Ethyl(meth)acrylat, Butyl(meth)acrylat, Pentyl(meth)acrylat und Cyclohexyl(meth)acrylat. Beispiele für Hydroxyalkylester mit einer primären Hydroxygruppe sind β-Hydroxyethylacrylat, Butandiol-1,4-monoacrylat, Hexandiol-1,6-monomethacrylat und Hydroxyoctylacrylat. Desweiteren sind Umsetzungsprodukte von Hydroxyalkyl(meth)acrylat mit ε-Caprolacton einsetzbar. Beispiele für Hydroxyalkylester mit einer sekundären Hydroxygruppe sind Hydroxypropyl(meth)acrylat, Addukte aus Glycidyl(meth)acrylat und gesättigten kurzen Fettsäuren wie Essigsäure, Addukte aus Cardura E (Glycidylester der Versaticsäure) mit ungesättigten COOH-funktionellen Verbindungen wie (Meth)acrylsäure, Crotonsäure, Maleinsäure bzw. mit den entsprechenden Anhydriden sowie Umsetzungsprodukte aus Glycidyl(meth)acrylat mit gesättigten verzweigten oder unverzweigten Fettsäuren, wie Butansäure, Capronsäure, Laurinsäure und Stearinsäure.

Es können zusätzlich Comonomere eingesetzt werden, beispielsweise Styrol, Styrolderivate und Vinylester, in Mengen bis zu 50 Gew.-%, bezogen auf das Gesamtgewicht der Monomeren.

Zur Einführung von Carboxylgruppen können (Meth)acrylsäure oder Umsetzungsprodukte aus Hydroxyalkyl(meth)acrylaten mit Dicarbonsäureanhydriden in solchen Mengen einpolymerisiert werden, daß eine Säurezahl von 0 bis 50 mg KOH/g resultiert.

Die als Komponente A) eingesetzten Polyester sind Polykondensationsprodukte aus mehrwertigen Polycarbonsäuren oder deren Anhydriden und mehrwertigen Polyolen, gegebenenfalls unter Verwendung von Monocarbonsäuren. Derartige Polyester werden bevorzugt mit einem Alkoholüberschuß hergestellt. Die OH-Zahlen liegen im allgemeinen im Bereich von 30 bis 200 mg KOH/g, vorzugsweise von 60 bis 160 mg KOH/g, die Säurezahlen bei 0 bis 50 mg KOH/g. Bei der Herstellung kann jedoch auch so vorgegangen werden, daß freie Carboxylgruppen entsprechend einer Säurezahl von 1 bis 50 mg KOH/g, bevorzugt 5 bis 30 mg KOH/g, erhalten bleiben. Dies kann beispielsweise durch unvollständige Veresterung erfolgen oder durch Verwendung von carboxylgruppenhaltigen Monomeren, beispielsweise Di-Hydroxycarbonsäuren, wie Dimethylolpropionsäure, Tricarbonsäuren.

Das zahlenmittlere Molekulargewicht beträgt 1000 bis 6000, vorzugsweise 1000 bis 3000.

Beispiele für geeignete Polycarbonsäuren sind ortho-Phthalsäureanhydrid, Isophthalsäure, Tetrahexahydrophthalsäure, 1,4-Cyclohexandicarbonsäure, 4-Methylhexahydrophthalsäure, Bernsteinsäure(anhydrid), Adipinsäure, Sebazinsäure, Dimer-Fettsäure.

Geeignete Alkoholkomponenten sind beispielsweise Ethylenglykol, Polyethylenglykole, Butandiole, Neopentylglykol, Cyclohexandimethanol, Trimethylpentandiol, Trimethylolethan, Glycerin, Pentaerythrit, Trishydroxyethylisocyanurat.

Die Polyester können auch geringe Anteile an Maleinsäure oder Maleinsäureanhydrid enthalten. Gegebenenfalls können zusammen mit den oben genannten Polycarbonsäuren auch natürliche und synthetische Monocarbonsäuren eingesetzt werden, beispielsweise Benzoesäure, Tertiärbutylbenzoesäure, Laurinsäure, Fettsäuren aus natürlich vorkommenden Ölen.

Die Polyester können als Modifizierungskomponente Glycidylester von α, α-disubstituierten Monocarbonsäuren und ε-Caprolacton enthalten.

Die erfindungsgemäß zu verwendenden Polymerisate B) können durch die bekannten Polymerisationsverfahren, wie bereits beschrieben bei der erfindungsgemäßen Komponente A), hergestellt werden. Dabei wird bevorzugt ein Monomerengemisch eingesetzt aus
a) 20 bis 50 Gew.-% Ethylhexyl(meth)acrylat,
b) 30 bis 60 Gew.-% einem oder mehreren Hydroxyalkyl(meth)acrylat,
c) 15 bis 40 Gew.-% davon verschiedenen α,β-ungesättigten Monomeren und
d) 0 bis 4 Gew.-% (Meth)acrylsäure.

Beispiele für verwendbare Monomerkomponenten b) und c) sind die bereits unter Komponente A) beschriebenen Monomerkomponenten.

Die erfindungsgemäßen Dispersionen C) können beispielsweise hergestellt werden durch Bildung einer dispersen Phase aus unvernetzten (Meth)acryl-Copolymeren f) in dem gelösten (Meth)acryl-Copolymerisat und/oder Polyester e).

Als Komponente e) geeignete Polyester sind beispielsweise Veresterungsprodukte aus aliphatischen und/oder cycloaliphatischen Polyolen und aliphatischen, cycloaliphatischen und/oder aromatischen Polycarbonsäuren, wie sie für lacktechnische Zwecke üblich sind. Sie können beispielsweise Hydroxyl- und Säurezahlen entsprechend denen der Komponente A) aufweisen.

Die (Meth)acryl-Copolymerisate, die als Komponente f) einsetzbar sind, können ein zahlenmittleres Molekulargewicht (Mn), OH-Zahlen und Säurezahlen entsprechend denen der Komponente A) aufweisen. Dies sind für Lackzwecke übliche Copolymerisate, die z.B. erhältlich sind durch radikalische Copolymerisation von α,β-olefinisch ungesättigten Monomeren, wie beispielsweise bereits unter Komponente A) beschrieben.

Hauptbestandteil der dispersen Phase e) sind Hydroxyalkylester der Acrylsäure und Methacrylsäure.

Bis zur Hälfte der Moleküle der Polyester und/oder der (Meth)acryl-Copolymerisate der Komponente e) können jeweils mit einem Molekül Maleinsäure oder Maleinsäureanhydrid verestert sein. Bevorzugt erfolgt eine Veresterung mit Maleinsäure.

Die Herstellung der Dispersion C) erfolgt durch radikalische Polymerisation, beispielsweise durch Vorlegen der Bindemittelmatrix d) in solvatisierter Form in einem Reaktionsgefäß, Aufheizen auf Reaktionstemperatur und Zugabe eines Monomeren/Initiatorgemisches der dispersen Phasen e) kontinuierlich innerhalb von beispielsweise 2 bis 8 Stunden. Im Fall der Halbesterbildung mit Maleinsäure wird vor Zugabe der Phase e) mit der entsprechenden Menge an Maleinsäure Anhydrid versetzt und bei beispielsweise 100 bis 120°C verestert. Die Polymerisation erfolgt beispielsweise bei Temperaturen zwischen 60 und 160°C. Als organische Lösemittel sind beispielsweise die bereits oben genannten einsetzbar.

Wie bereits bei der Herstellung der Komponente A) beschrieben, können zur Herstellung der Komponente C) zur Regelung des Molekulargewichts Kettenübertragungsmittel mitverwendet werden, beispielsweise Mercaptane und Chlorkohlenwasserstoffe.

Die Polymerisationsbedingungen werden so gewählt, daß es zu einer störungsfreien Ausbildung der Polymermikroteilchen kommt. Die Teilchengröße liegt bevorzugt im Bereich von 50 bis 800 nm, vorzugsweise bei 200 bis 500 nm.

Die Glasübergangstemperatur der dispersen Phase von Komponente C) liegt vorzugsweise in einem Bereich von -40°C bis +60°C.

Erfindungsgemäß werden als Komponente D) aliphatische Polyisocyanate eingesetzt, die durch Trimerisierung von aliphatischen und cycloaliphatischen Diisocyanaten erhalten werden. Beispiele hierfür sind Trimere (Isocyanurate und Biurete) von Hexamethylendiisocyanat, 3,3,5-Trimethylhexamethylendiisocyanat, Tetramethylhexamethylendiisocyanat, Isophorondiisocyanat, Methylen-bis-(4-isocyanatocyclohexan) und 1,4-Diisocyanatocyclohexan. Bevorzugt eingesetzt wird das Hexamethylendiisocyanat-Trimer. Es sind auch Gemische von Hexamethylendiisocyanat-Trimer mit anderen aliphatischen Diisocyanaten verwendbar.

Die erfindungsgemäß einsetzbaren Polyisocyanate werden teilblockiert durch das erfindungsgemäß zu verwendende ε-Caprolactam. Die Teilblockierung der NCO-Gruppen beträgt 50 bis 75 %.

Zur Ausbildung von disubstituierten Harnstoffen wird das aliphatische Polyisocyanat mit primären Monoaminen umgesetzt. Derartige Monoamine können sein n-Alkylamine wie beispielsweise n-Butyl-, n-Hexyl-, n-Octyl-, n-Stearylamin, bevorzugt n-Octylamin und n-Decylamin; Hydroxyalkylamine, wie beispielsweise Hydroxyethylamin, Hydroxypropylamin, Hydroxybutylamin, bevorzugt Hydroxyethylamin; n-Alkyl-Aryl-Amine, wie beispielsweise Benzylamine.

Zur Herstellung der erfindungsgemäßen Überzugsmittel können die erfindungsgemäßen Rheologie-Zusammensetzungen mit einem oder mehreren der üblichen hydroxylgruppenhaltigen Bindemitteln eingesetzt werden. Beispiele für derartige Bindemittel sind Bindemittel auf Basis von (Meth)acryl-Copolymerisaten, Polyestern, Polyurethanen, Epoxidharzen, wie sie in der Lackindustrie geläufig sind. Dies können auch Bindemittel entsprechend der Komponente A) der erfindungsgemäßen Rheologie-Zusammensetzung sein. Die Überzugsmittel können in üblicher Weise formuliert werden mit üblichen Vernetzungsmitteln wie beispielsweise Aminoplastharzen oder Polyisocyanaten. Geeignete Aminoplastharze sind beispielsweise alkylierte Kondensate, hergestellt durch Umsetzung von Aminotriazinen und Amidotriazinen mit Aldehyden.

Als Polyisocyanate können aliphatische, cycloaliphatisch und aromatische übliche Polyisocyanate verwendet werden, beispielsweise Hexamethylendiisocyanat, Isophorondiisocyanat, Biureth- oder Isocyanuratgruppen enthaltende Polyisocyanate.

Die Überzugsmittel können neben den bereits genannten Lösemitteln zusätzliche lackübliche Additive enthalten, beispielsweise Verlaufsmittel, Weichmacher, Antiabsetzmittel, Härtungsbeschleuniger. Darüber hinaus können lackübliche Füllstoffe und Pigmente, z.B. transparente oder deckende anorganische und/oder organische Farbpigmente zum Einsatz kommen.

Die Applikation der erfindungsgemäßen Überzugsmittel erfolgt nach üblichen Verfahren, z.B. durch Handspritzen, Spritzen mit dem Automaten oder elektrostatische Applikation (ESTA).

Die erfindungsgemäßen Überzugsmittel führen zu Überzügen, die eine besonders gute Ablaufsicherheit von Klar- und Decklackschichten aufweisen, insbesondere bei Einbrennprozessen. Auch in den flüssigen Lacken wird eine hohe Ablaufsicherheit gewährleistet. Dabei war nicht zu erwarten, daß neben der hohen Ablaufsicherheit ein guter Verlauf resultiert, ohne beispielsweise Läuferausbildung an scharfen Kanten, Sikken und Riefen. Darüber hinaus lassen sich die erfindungsgemäßen Rheologie-Zusammensetzungen besonders gut in die übrigen Überzugsmittelbestandteile einarbeiten. Weder beim Einbrennvorgang, bei Bestrahlung mit UV-Licht noch bei einer Freibewitterung tritt eine Vergilbung der Überzüge auf.

Die folgenden Beispiele dienen zur Erläuterung der Erfindung.

### Herstellung Komponente B:

### Beispiel 1

In einem 2-Liter-Dreihalskolben, der mit Rührwerk, Thermometer, Kühler und zwei Tropftrichtern ausgestattet ist, werden 200 g Solvent Naphtha und 20 g n-Butylacetat vorgelegt und unter Rühren auf 142°C aufgeheizt. Innerhalb von 6 Stunden wird eine Monomeren-Mischung aus 5 g Acrylsäure, 148 g Isobutylacrylat, 190 g 2-Ethylhexylmethacrylat und 267 g 2-Hydroxypropylmethacrylat gleichzeitig mit einer Initiator-Lösung aus 10 g Di.-tert.-butylperoxid, 30 g tert.-Butylperoctoat und 30 g Solvent Naphtha zugetropft. Nach Zulaufende werden die Tropftrichter mit 30 g n-Butylacetat gespült, danach wird der Ansatz 6 Stunden lang nachpolymerisiert. Der Umsatz beträgt dann ca. 98 %. Anschließend wird mit 50 g n-Butylacetat und 20 g Solvent Naphtha auf einen Festkörper von 65 % verdünnt.

### Herstellung Komponente C:

### Beispiel 2

In einem 2-Liter-Dreihalskolben, der mit Rührwerk, Thermometer, Kühler und zwei Tropftrichtern ausgestattet ist, werden 616 g hydroxylgruppenhaltiger Polyester (Säurezahl = 5 mg KOH/g, OH-Zahl = 110 mg KOH/g, 65 %ig in Xylol gelöst), 34 g Xylol, 20 g n-Butylacetat und 7,5 g Maleinsäureanhydrid vorgelegt und auf 115°C aufgeheizt. Innerhalb von 2,5 Stunden werden 238 g 2-Hydroxyethylacrylat gleichzeitig mit einer Initiator-Lösung aus 4,5 g tert.-Butylperoctoat und 30 g Butylacetat zugetropft. Nach Zulaufende werden die Tropftrichter mit 25 g n-Butylacetat gespült, danach wird der Ansatz 2 Stunden nachpolymerisiert. Der Umsatz beträgt dann ca. 98 %. Anschließend wird mit 25 g n-Butylacetat auf einen Festkörper von 65 % verdünnt.

### Herstellung Komponente D/E:

### Beispiel 3

In einem 2-Liter-Dreihalskolben, der mit einem Rührwerk, Thermometer und Kühler ausgestattet ist, werden 150 g Xylol, 90 g Methoxypropylacetat, 564 g trimeres Hexamethylendiisocyanat (gelöst 90 %ig in n-Butylacetat: Solvent Naphtha = 1 : 1) und 196 g ε-Caprolactam vorgelegt und unter Rühren auf 60°C aufgeheizt. Danach wird die Heizung abgeschaltet. Durch exotherme Reaktion steigt die Temperatur auf 75°C an. Das Reaktionsgemisch wird bei 75°C gehalten, bis eine NCO-Zahl von 3,8 erreicht ist. Danach wird der Ansatz auf 40°C abgekühlt und abgefüllt. Der Festkörper beträgt ca. 70 %.

### Herstellung der Rheologie-Zusammensetzungen:

### Beispiel 4

In ein Mischgefäß werden 10 Gew.-Teile des (Meth)acryl-Copolymerisats aus Beispiel 1 vorgelegt und unter Verwendung eines Schnellrührers (Rührgeschwindigkeit von 800 U/min) 38 Gew.-Teile eines hydroxylgruppenhaltigen Polyesters als Komponente A (Säurezahl = 20,3 mg KOH/g, OH-Zahl = 80 mg KOH/g, 65 %ig in Xylol gelöst), 2 Gew.-Teile der Mikro-Dispersion aus Beispiel 2 und 4,3 Gew.-Teile Solvent Naphtha hinzugefügt. Anschließend werden 15 Gew.-Teile des partiell-verkappten Polyisocyanats aus Beispiel 3 untergerührt und eine Mischung aus 1,1 Gew.-Teilen n-Octylamin und 1,1 Gew.-Teilen Solvent Naphtha zugegeben. Das Reaktionsgemisch wird 60 Minuten bei 30 - 35°C gehalten. Dann wird mit 20 Gew.-Teilen des oben genannten hydroxylgruppenhaltigen Polyesters vermischt und mit 8,5 Gew.-Teilen Solvent Naphtha verdünnt. Es resultierte eine Rheologie-Zusammensetzung mit einem Festkörper von 60,4%, einer Viskosität η von 1320 mPa.s, einer Schubspannung τ von 17,5 Pa bei einer Schergeschwindigkeit von (15s)⁻¹.

### Beispiel 5

In ein Mischgefäß werden 10 Gew.-Teile des (Meth)acryl-Copolymerisats aus Beispiel 1 vorgelegt und unter dem Schnellrührer (Rührgeschwindigkeit von 800 U/min) 24 Gew.-Teile eines hydroxylgruppenhaltigen Polyesters als Komponente A (Säurezahl = 20,3 mg KOH/g, OH-Zahl = 80 mg KOH/g, gelöst 65 %ig in Xylol), 16 Gew.-Teile eines styrolfreien (Meth)acryl-Copolymerisats als weitere Komponente A (Säurezahl = 27,6 mg KOH/g, OH-Zahl = 132 mg KOH/g, 65 %ig in Solvent Naphtha gelöst), 2 Gew.-Teile der Mikro-Dispersion aus Beispiel 2 und 4,3 Gew.-Teile Solvent Naphtha hinzugefügt. Anschließend werden 15 Gew.-Teile des partiell-verkappten Polyisocyanats aus Beispiel 3 untergerührt und eine Mischung aus 1,1 Gew.-Teilen n-Octylamin und 1,1 Gew.-Teilen Solvent Naphtha zugegeben. Das Reaktionsgemisch wird 60 Minuten bei 30 - 35°C gehalten. Dann wird mit 10 Gew.-Teilen des oben genannten hydroxylgruppenhaltigen Polyesters und 10 Gew.-Teilen des oben genannten (Meth)acryl-Copolymerisats vermischt und mit 6,5 Gew.-Teilen Solvent Naphtha verdünnt. Es resultierte eine Rheologie-Zusammensetzung mit einem Festkörper von 60,1 %, einer Viskosität η von 1640 mPa.s, einer Schubspannung τ von 24,8 Pa bei einer Schergeschwindigkeit von (15s)⁻¹.

### Beispiel 6

In ein Mischgefäß werden 17 Gew.-Teile des (Meth)acryl-Copolymerisats aus Beispiel 1 vorgelegt und unter Verwendung eines Schnellrührers (Rührgeschwindigkeit von 800 U/min) 30 Gew.-Teile eines (Meth)acryl-Copolymerisats als Komponente A (20 % Styrol, Säurezahl = 23,1 mg KOH/g, OH-Zahl = 140 mg KOH/g, gelöst 60 %ig in Solvent Naphtha: n-Butanol = 34 : 6), 1,3 Gew.-Teile der Mikro-Dispersion (Beispiel 2) und 5 Gew.-Teile Solvent Naphtha hinzugefügt. Anschließend werden 15 Gew.-Teile des partiell-verkappten Polyisocyanats aus Beispiel 3 untergerührt und eine Mischung aus 1,1 Gew.-Teilen n-Octylamin und 1,1 Gew.-Teilen Solvent Naphtha zugegeben. Das Reaktionsgemisch wird 60 Minuten bei 30 - 35°C gehalten. Dann wird mit 27,5 Gew.-Teilen des oben genannten (Meth)acryl-Copolymerisats vermischt und mit 2 Gew.-Teilen Solvent Naphtha verdünnt. Es resultierte eine Rheologie-Zusammensetzung mit einem Festkörper von 58,0 %, einer Viskosität η von 2140 mPa.s, einer Schubspannung τ von 32,2 Pa bei einer Schergeschwindigkeit von (15s)⁻¹.

### Beispiel 7

In ein Mischgefäß werden 16 Gew.-Teile des (Meth)acryl-Copolymerisats aus Beispiel 1 vorgelegt und unter Verwendung eines Schnellrührers (Rührgeschwindigkeit von 800 U/min) 30 Gew.-Teile eines (Meth)acryl-Copolymerisats als Komponente A (16 % Styrol, Säurezahl = 21,8 mg KOH/g, OH-Zahl = 120 mg KOH/g, gelöst 62 %ig in Solvent Naphtha: n-Butanol = 32 : 6), 1,3 Gew.-Teile der Mikro-Dispersion aus den Beispielen 2 und 4 Gew.-Teile Solvent Naphtha hinzugefügt. Anschließend werden 15 Gew.-Teile des partiell-verkappten Polyisocyanats Beispiel 3 untergerührt und eine Mischung aus 1,1 Gew.-Teilen n-Octylamin und 1,1 Gew.-Teilen Solvent Naphtha zugegeben. Das Reaktionsgemisch wird 60 Minuten bei 30 - 35°C gehalten. Dann wird mit 30 Gew.-Teilen des oben genannten (Meth)acryl-Copolymerisats vermischt und mit 1,5 Gew.-Teilen Solvent Naphtha verdünnt. Es resultiert eine Rheologie-Zusammensetzung mit einem Festkörper von 62,1 %, einer Viskosität η von 2060 mPa.s, einer Schubspannung τ von 30,9 Pa bei einer Schergeschwindigkeit von (15s)⁻¹.

### Herstellung der Überzugsmittel:

### Beispiel 8

42,3 Gew.-Teile der Rheologie-Zusammensetzung Beispiel 4 werden durch einfaches Verrühren homogen mit 30,7 Gew.-Teilen eines (Meth)acryl-Copolymerisats (27 % Styrol, Säurezahl = 7,2 mg KOH/g, OH-Zahl = 137 mg KOH/g, gelöst 55 %ig in n-Butylacetat: Solvent Naphtha : Xylol = 28 : 11 : 6), 9 Gew.-Teilen n-Butylacetat, 0,9 Gew.-Teilen eines Lichtschutzmittels vom Typ Benzotriazol, 0,9 Gew.-Teil eines Lichtschutzmittels vom Typ HALS, 1,4 Gew.-Teilen eines Silikonöls (10 % in Xylol), 3,7 Gew.-Teilen Butylglykolacetat, 8 Gew.-Teilen Solvent Naphtha und 3,1 Gew.-Teilen n-Butylacetat vermischt.

### Beispiel 9

27,8 Gew.-Teile der Rheologie-Zusammensetzung Beispiel 6 werden durch einfaches Verrühren homogen mit 26,8 Gew.-Teilen eines (Meth)acryl-Copolymerisats (20 % Styrol, Säurezahl = 23,1 mg KOH/g, OH-Zahl = 140 mg KOH/g, gelöst 60 %ig in Solvent Naphtha : n-Butanol = 34 : 6), 21,9 Gew.-Teilen eines butylierten Melaminharzes, gelöst 63 %ig in n-Butanol: Xylol = 23 : 14, 0,8 Gew.-Teilen eines Lichtschutzmittels vom Typ Benzotriazol, 0,8 Gew.-Teilen eines Lichtschutzmittels vom Typ HALS, 1,6 Gew.-Teilen eines Silikonöls (10 % in Xylol), 4 Gew.-Teilen Butylglykolacetat, 14,3 Gew.-Teilen Solvent Naphtha und 2 Gew.-Teilen n-Butanol vermischt.

### Herstellung einer Härter-Lösung:

### Beispiel 10

50 Gew.-Teile eines aliphatischen Polyisocyanats auf der Basis von Hexamethylendiisocyanat werden homogen mit 10 Gew.-Teilen Xylol, 23 Gew.-Teilen Solvent Naphtha, 4 Gew.-Teilen Methoxypropylacetat, 9 n-Butylacetat, 3,85 Gew.-Teilen Ethoxypropylacetat und 0,15 Gew.-Teilen 10 %igem Dibutylzinndilaurat vermischt.

### Applikation:

Das Überzugsmittel aus Beispiel 8 wurde kürz vor der Verarbeitung mit der Härter-Lösung aus Beispiel 10 vermischt und durch Spritzauftrag im Naß-in-Naß-Verfahren auf eine lösemittelbasierende Basislackschicht aufgebracht. Nach einer Ablüftphase von 10 Minuten wurde 45 Minuten bei 80°C gehärtet. Die applizierten Lackfilme zeigten einen sehr guten Verlauf, waren hart, brillant und hatten eine Ablaufsicherheit bis 70 µm.

Das Überzugsmittel aus Beispiel 9 wurde durch Spritzauftrag im Naß-in-Naß-Verfahren auf eine lösemittelbasierende Basislackschicht aufgebracht. Nach einer Ablüftphase von 5 Minuten wurde 20 Minuten bei 140°C gehärtet. Die applizierten Lackfilme zeigten einen sehr guten Verlauf, waren hart, brillant und hatten eine Ablaufsicherheit bis 60 µm.

## Patentansprüche

1. Zusammensetzung, geeignet als Rheologiebeeinflusser für Überzugsmittel, ein Gemisch enthaltend, das erhältlich ist durch Vorlage von
A) einem oder mehreren hydroxylgruppenhaltigen (Meth)acryl-Copolymerisaten und/oder einem oder mehrern hydroxylgruppenhaltigen Polyestern mit einer Hydroxylzahl von 30 bis 200 mg KOH/g und einem Carboxylgruppengehalt entsprechend einer Säurezähl von 0 bis 50 mg KOH/g,
B) einem oder mehreren Copolymerisaten aus Ethylhexyl(meth)acrylat, einem oder mehreren Hydroxyalkyl(meth)acrylaten sowie davon verschiedenen α,β-ungesättigten Monomeren und
C) einer hydroxyfunktionellen Mikrodispersion, erhältlich durch Vorlage einer Losung eines oder mehrerer hydroxyl- und/oder carboxylgruppenhaltiger Polyester und/oder (Meth)acryl-Copolymerisate, wobei bis zur Hälfte der Polyester- und/oder Copolymerisatmoleküle jeweils mit einem Molekül Maleinsäure oder Maleinsäureanhydrid verestert sein kann, sowie Polymerisation von einem oder mehreren Hydroxyalkyl(meth)acrylaten im Gemisch mit einem oder mehreren davon verschiedenen ungesättigten Monomeren in dieser Vorlage, und Umsetzung des Gemisches aus A), B) und C) mit
D) einem oder mehreren aliphatischen Polyisocyanaten,
E) ε-Caprolactam und
F) einem oder mehreren primären Monoaminen, wobei die Menge der in Komponenten A), B) und C) enthaltenen (Meth)acryl-Copolymerisate und/oder Polyester 50 bis 80 Gew.-%, die Menge der Polymerisate B) 5 bis 30 Gew.-%, die Menge der in C) enthaltenen Mikroteilchen 1 bis 5 Gew.-%, die Menge der Diisocyanate D) 7 bis 33 Gew.-%, die Menge ε-Caprolactam E) 2 bis 9 Gew.-%, und die Menge der primären Monoamine F) 1 bis 5 Gew.-% beträgt, wobei sich die Gewichtsprozente jeweils auf den Festkörpergehalt beziehen und zu 100 Gew.-% addieren.

2. Zusammensetzung, geeignet als Rheologiebeeinflusser für Überzugsmittel gemäß Anspruch 1, in der Komponente F) im Gemisch mit einem Teil der Komponenten A), B) und/oder des löslichen Anteils der Komponente C) im Verhältnis Komponente F) zu Komponente A), B) und/oder C) von 9 : 1 bis 1 : 1 eingesetzt wird.

3. Zusammensetzung, geeignet als Rheologiebeeinflusser für Überzugsmittel gemäß einem oder mehreren der Ansprüche 1 und 2, welche Pigmente, Füllstoffe, lackübliche Additive und/oder Lösemittel enthält.

4. Zusammensetzung, geeignet als Rheologiebeeinflusser für Überzugsmittel gemäß einem oder mehreren der Ansprüche 1 bis 3, worin Komponente B) erhältlich ist durch Polymerisation einer Mischung von
a) 20 bis 50 Gew.-% Ethylhexyl(meth)acrylat
b) 30 bis 60 Gew.-% von einem oder mehreren Hydroxyalkyl(meth)acrylaten
c) 15 bis 40 Gew.-% davon verschiedenen α,β-ungesättigten Monomeren und
d) 0 bis 4 Gew.-% (Meth)acrylsäure.

5. Zusammensetzung, geeignet als Rheologiebeeinflusser für Überzugsmittel gemäß einem oder mehreren der Ansprüche 1 bis 4, worin die Komponente C) erhältlich ist durch Vorlage einer Lösung von
e) 15 bis 85 Gew.-% einem oder mehreren hydroxyl- oder carboxylgruppenhaltiger Polyestern und/oder (Meth)acryl-Copolymerisaten, wobei bis zur Hälfte der Polyester und/oder Copolymerisatmoleküle jeweils mit einem Molekül Maleinsäure verestert sein kann und Polymerisation in dieser Vorlage von
f) 15 bis 85 Gew.-% einem oder mehreren Hydroxyalkyl(meth)acrylate und einem oder mehreren davon verschiedenen ungesättigten Monomeren.

6. Zusammensetzung, geeignet als Rheologiebeeinflusser für Überzugsmittel gemäß einem oder mehreren der Ansprüche 1 bis 5, worin die radikalisch polymerisierbaren Monomeren der Komponente f) ein Gemisch von
f1) 80 bis 100 Gew.-% eines oder mehrerer Hydroxyalkyl(meth)acrylate und
f2) 0 bis 20 Gew.-% eines oder mehrerer anderer ungesättigter Monomerer sind.

7. Zusammensetzung, geeignet als Rheologiebeeinflusser für Überzugsmittel gemäß einem oder mehreren der Ansprüche 1 bis 6, worin als Komponente A) ein oder mehrere (Meth)acrylcopolymerisate eingesetzt werden, die ein Zahlenmittel der Molmasse von 1500 bis 30000 aufweisen und eine Glasübergangstemperatur von -20°C bis +80°C besitzen.

8. Zusammensetzung, geeignet als Rheologiebeeinflusser für Überzugsmittel gemäß einem oder mehreren der Ansprüche 1 bis 7, worin als Komponente A) ein oder mehrere Polyester eingesetzt werden, die eine OH-Zahl von 30 bis 200 mg KOH/g und eine Säurezahl von 0 bis 50 mg KOH/g besitzen und zahlenmittleres Molekulargewicht von 1000 bis 6000 aufweisen.

9. Zusammensetzung, geeignet als Rheologiebeeinflusser für Überzugsmittel gemäß einem oder mehreren der Ansprüche 1 bis 8, worin als Komponente C) eine hydroxyfunktionelle Mikrodispersion eingesetzt wird, in der die Mikroteilchen eine Teilchengröße von 50 bis 800 nm besitzen und die Glasübergangstemperatur der dispersen Phase in einem Bereich von -40°C bis +60°C liegt.

10. Zusammensetzung, geeignet als Rheologiebeeinflusser für Überzugsmittel gemäß einem oder mehreren der Ansprüche 1 bis 9, worin als Komponente D) ein aliphatisches Polyisocyanat, insbesondere ein Hexamethylendiisocyanattrimer eingesetzt und mit ε-Caprolactam teilblockiert wird.

11. Zusammensetzung, geeignet als Rheologiebeeinflusser für Überzugsmittel gemäß einem oder mehreren der Ansprüche 1 bis 10, worin als Komponente F) ein primäres Monoamin mit 4 bis 18 Kohlenstoffatomen im Molekül, insbesondere mit 8 bis 10 Kohlenstoffatomen im Molekül eingesetzt wird.

12. Überzugsmittel, enthaltend eine Zusammensetzung gemäß einem oder mehreren der Ansprüche 1 bis 11 als Rheologiebeeinflusser, sowie ein oder mehrere hydroxygruppenhaltige Bindemittel, neben einem oder mehreren Vernetzungsmitteln, sowie die gegebenenfalls einem oder mehreren Pigmenten, Füllstoffen, lacküblichen Additiven und/oder Lösemitteln.

13. Verfahren zur Herstellung einer Zusammensetzung gemäß einem oder mehreren der Ansprüche 1 bis 11, dadurch gekennzeichnet, daß man eine Losung von
e) 15 bis 85 Gew.-% eines oder mehrerer hydroxyl- oder carboxylgruppenhaltiger Polyester und/oder (Meth)acryl-Copolymerisate, wobei bis zur Hälfte der Polyester und/oder Copolymerisatmoleküle jeweils mit einem Molekül Maleinsäure verestert sein kann, vorgelegt und in dieser
f) 15 bis 85 Gew.-% eines oder mehrerer Hydroxyalkyl(meth)acrylate und eines oder mehrerer davon verschiedener ungesättigter Monomere polymerisiert werden,
wodurch man Komponente C) erhält, und daß man anschließend
A) ein oder mehrere hydroxylgruppenhaltige (Meth)acryl-Copolymerisate und/oder ein oder mehrere hydroxylgruppenhaltige Polyester mit einer Hydroxylzahl von 30 bis 200 mg KOH/g und einem Carboxylgruppengehalt entsprechend einer Säurezahl von 0 bis 50 mg KOH/g,
B) ein oder mehrere Copolymerisate aus Ethylhexyl(meth)acrylat, ein oder mehrere Hydroxyalkyl(meth)acrylate sowie davon verschiedene α,β-ungesättigte Monomere und
C) vermischt,
wobei die Menge der in Komponenten A), B) und C) enthaltenen (Meth)acryl-Copolymerisate und/oder Polyester 50 bis 80 Gew.-%, die Menge der Polymerisate B) 5 bis 30 Gew.-% und die Menge der in C) enthaltenen Mikroteilchen 1 bis 5 Gew.-% beträgt, und daß man mit dem so erhaltenen Gemisch
D) 7 bis 33 Gew.-% eines oder mehrerer aliphatischer Polyisocyanate und
E) 2 bis 9 Gew.-% ε-Caprolactam umsetzt und danach
F) 1 bis 5 Gew.-% eines oder mehrerer primärer Monoamine umsetzt, welche gegebenenfalls mit einem, vor Umsetzung der Mischung von A), B) und C) mit D) und E), aus A), B) und/oder C) entnommenen Teil der hydroxylhaltigen Bindemittel vermischt wurden,
wobei sich die Gewichtsprozente jeweils auf den Festkörpergehalt beziehen und zu 100 Gew.-% addieren.

14. Verfahren nach Anspruch 13, dadurch gekennzeichnet, daß man als Komponente f) ein Gemisch aus
f1) 80 bis 100 Gew.-% eines oder mehrerer Hydroxyalkyl(meth)acrylate und
f2) 0 bis 20 Gew.-% eines oder mehrerer anderer ungesättigter Monomerer verwendet.

15. Verfahren zur Herstellung eines Überzugsmittels gemäß Anspruch 12, dadurch gekennzeichnet, daß man eine Zusammensetzung, hergestellt nach einem der Verfahren 13 oder 14, mit einem oder mehreren hydroxygruppenhaltigen Bindemitteln, einem oder mehreren Vernetzungsmitteln, sowie gegebenenfalls einem oder mehreren Pigmenten, Füllstoffen, lacküblichen Additiven und/oder Lösemitteln vermischt.

16. Verwendung der Zusammensetzungen nach einem der Ansprüche 1 bis 11 als Rheologiebeeinflusser zur Herstellung ablaufsicherer pigmentierter und nicht pigmentierter Überzugsmittel.
